# EUROPÄISCHE PATENTSCHRIFT

(11) **EP 3 616 305 B1**
(45) Veröffentlichungstag und Bekanntmachung des Hinweises auf die Patenterteilung: **31.03.2021**
(21) Anmeldenummer: 18730291.4
(22) Anmeldetag: 01.06.2018
(51) Int. Cl.: H02K 5/136, H01R 13/527, H02K 5/22, H01R 13/52, H02G 3/22, H02G 15/013, H01B 17/30, H01B 17/56, H01R 13/533

(54) **LEITUNGSDURCHFÜHRUNG**
CABLE DUCT
PASSAGE DE CÂBLE

(30) Priorität: 02.06.2017 EP 17174312
(43) Veröffentlichungstag der Anmeldung: 04.03.2020
(73) Patentinhaber: Siemens Aktiengesellschaft, 80333 München (DE)
(72) Erfinder: MEYER, Johannes, 84364 Bad Birnbach (DE); MUTZL, Thomas, 94167 Tettenweis (DE); SCHNEIDER, Josef Sebastian, 94544 Hofkirchen (DE)
(86) Internationale Anmeldenummer: PCT/EP2018/064420
(87) Internationale Veröffentlichungsnummer: WO 2018/220156

(56) Entgegenhaltungen:
- EP-A2- 0 087 960
- GB-A- 1 031 353
- US-A- 4 401 734
- US-A- 5 203 723
- US-B1- 6 368 451

## Beschreibung

Die Erfindung betrifft eine Leitungsdurchführung in einer dynamoelektrischen Maschine, die in explosiven Atmosphären betrieben werden soll.

Hierzu muss die dynamoelektrische Maschine und deren Anbauteile Angaben erfüllen, die in der DIN EN 60079-0 aufgeführt sind. Demnach erlauben Ex-d Motoren eine Explosion im Inneren des Motors. Es muss lediglich gewährleistet sein, dass kein Funke bzw. Flammen durch Öffnungen des Gehäuses der dynamoelektrischen Maschine nach außen treten können. Um dies zu verhindern werden sogenannte Zündspalte vorgesehen, in denen das entzündete Gas soweit abkühlt, bis es erlischt und somit nach außen keine schädliche Wirkung entfalten kann.

Es muss aber dennoch gewährleistet sein, dass die dynamoelektrische Maschine über Energieversorgungsleitungen mit Spannung und Strom versorgt wird, so dass eine elektrische Verbindung zwischen dem Inneren und dem Äußeren der dynamoelektrischen Maschine hergestellt werden muss. Auch diese Leitungsdurchtritte müssen, damit die gesamte dynamoelektrische Maschine den Anforderungen des Explosionsschutzes genügt, ebenso diesen Anforderungen erfüllen.

Bei bisherigen Leitungsdurchführungen von Ex-d Motoren wird eine Gewindebuchse in ein Gehäuse des Motors eingeschraubt. Durch diese Verschraubung mit dem Gehäuse entsteht ein Zündspalt in Form eines Gewindespaltes. Die verschiedenen Arten von Zündspalten sind in der Norm DIN EN 60079-1 aufgeführt und mit den dort vorgeschriebenen Mindestmaßen versehen.

Die Stromführung von außen nach innen wird bisher durch einen Bolzen realisiert, der dabei zwischen seiner Gewindebuchse und seiner Oberfläche einen zylindrischen Spalt aufweist. Dieser Spalt ist auf hohe Toleranzen exakt zu arbeiten, um die Weite des Spaltes und damit den Zündspalt zu beeinflussen und in seinen geometrischen Abmessungen möglichst gering zu halten.

Aus der US 5 203 723 A ist eine hermetisch abgedichtete elektrische Steckerstiftkonstruktion für den Einsatz in Bohrlochmessgeräten bekannt. Dabei wird ein länglicher Stift mit zwei Enden zur Bildung elektrischer Verbindungen verwendet, wobei der Stift eine Schulter und einen zentralen Gewindeabschnitt auf einer Seite der Schulter aufweist und aus leitfähigem Metall gebildet ist, das sich mit einem Kunststoffkörper verbindet.

Aus der US 6 368 451 B1 ist ein Hochspannungs-Durchführungsverbinder zur Isolierung von Hochspannung durch ein Reaktorgehäuse bekannt. Die Verbinder zeigen einen Isolierkörper mit einer Bohrung, die sich axial durch den Isolierkörper erstreckt, um einen Mittelleiter aufzunehmen, eine mit einem Gewinde versehene Schalenanordnung, um den Isolierkörper in Eingriff zu bringen und den Isolierkörper an einem Reaktorgehäuse zu befestigen, und eine gasdichte Abdichtung, um Gaslecks zum Mittelleiter zu verhindern. Der Mittelleiter enthält ein erstes Ende zum Kontaktieren einer Hochspannungsquelle und ein zweites Ende zum Kontaktieren einer Hochspannungselektrode eines Reaktors.

Aus der GB 103 1353 A ist ein Elektromotor bekannt, der ein explosionsgeschütztes Gehäuse als Kapselung sowie eine oder mehrere abgedichtete explosionsgeschützte Öffnungen im Gehäuse aufweist, um so ein Einführen der Verdrahtung in das Gehäuse zu ermöglichen, damit der Motor an eine externe Stromversorgung angeschlossen werden kann. Dabei weist das Gehäuse einen Gehäusemantel auf mit einem ersten Endelement, in dem ein Ende des Rotors gelagert ist, und ein zweites Endelement, in dem das andere Ende des Rotors gelagert ist, wobei das Gehäuse einen ersten Hohlraum umgibt, wobei in diesem Hohlraum ein fernbedienbares Schütz montiert ist, wobei dieses Schütz in betriebswirksamer Weise so mit dem Motor verdrahtet ist, dass durch Fernbedienung ein Ein- und Ausschalten des Motors gesteuert werden kann. Das Gehäuse weist einen zweiten Hohlraum auf wobei der zweite Hohlraum Durchführungen für Kabel der Stromversorgung und für die Zuleitungen aufweist, die für ein Fernübertragungserregersignal zur Schützspule vorgesehen sind

Aus der EP 0 087 960 A2 ist ein Elektromotor bekannt, der ein druckfestes Gehäuse und abgedichtete druckfeste Öffnungen im Gehäuse umfasst, um den Eintritt von Kabeln in das Gehäuse zum Verbinden des Motors mit einer äußeren Stromversorgung zu ermöglichen. Das Gehäuse umfasst eine Hülle mit einem ersten Endelement, in dem ein Ende des Rotors angeordnet ist, und einem zweiten Endelement, in dem das andere Ende des Rotors angeordnet ist, wobei das Gehäuse auch einen ersten Hohlraum umschließt, in dem ein Schütz montiert ist. Das Gehäuse definiert auch einen zweiten Hohlraum, wobei der zweite Hohlraum einen Anschlussblock enthält, wobei eine Verdrahtung von dem Block vom zweiten Hohlraum durch die druckfesten Öffnungen zum Schütz geführt wird.

Ausgehend davon, liegt der Erfindung die Aufgabe zugrunde eine Leitungsdurchführung bereitzustellen, die mit vergleichsweise weniger Aufwand und Herstellungskosten die erforderlichen Zündspalte einer dynamoelektrischen Maschine, insbesondere eines Motors, insbesondere gemäß der oben genannten Norm einhält.

Die Lösung der gestellten Aufgabe gelingt durch eine dynamoelektrische Maschine für explosive Umgebungen mit zumindest einer Leitungsdurchführung, einer Leitung in einem Gehäuse der dynamoelektrischen Maschine mit einer Gewindebuchse und einem Anschlussbolzen, wobei die Gewindebuchse ein Isolator ist und in einer Ausnehmung des Gehäuses eingeschraubt ist, wobei der Anschlussbolzen aus elektrisch leitfähigen Material ist und zumindest abschnittsweise mit einem Gewinde versehen ist, wobei an dem Anschlussbolzen an beiden Enden Anschlussmöglichkeiten für Leitungen oder Litzen vorhanden sind, wobei der Anschlussbolzen in die Gewindebuchse einschraubbar ist, wobei die Gewindelänge im Eingriff des Anschlussbolzens in der Gewindebuchse größer ist, als die Gewindelänge im Eingriff von Gewindebuchse im Gehäuse, wobei die Gewindebuchse in das Gehäuse eingeschraubt wird und mit einem Kragen und den Gewinde einen Zündspalt verlängert, und wobei der Anschlussbolzen eine Anschlagschulter aufweist, die in die Gewindebuchse eingedreht ist und mit der Schulter und den Gewinde einen Zündspalt verlängert.

Erfindungsgemäß ist nunmehr der Anschlussbolzen mit einem Gewinde versehen, ebenso wie die Gewindebuchse mit einem Gewinde versehen ist, um im Gehäuse des Motors befestigt zu werden.

Durch diese erfindungsgemäße Ausführung der Leitungsdurchführung mit zwei Gewindespalten wird die Anzahl, als auch die Länge der Zündspalte erhöht, so dass ein eventuell entzündetes Gas im inneren der dynamoelektrischen Maschine über die Spalte abgekühlt wird bis es erlischt.

Durch den erfindungsgemäßen Aufbau der Leitungsdurchführung wird außerdem der gesamte in Anspruch genommene Bauraum dieser Leitungsdurchführung reduziert. Die Abmessungen eines Gewindespalts sind bei einer vorgegebenen Länge, z.B. einer Gehäusewandung wesentlich länger als die Maße eines zylindrischen Spalts. Des Weiteren ist die Herstellung eines Gewindes wesentlich kostengünstiger als die Herstellung eines langen vergleichsweise hoch tolerierten zylindrischen Bolzens, der sehr aufwändig herzustellen ist. Auch die Spaltweite innerhalb eines Gewindes ist wesentlich einfacher herzustellen. Insofern lassen sich Gewinde wesentlich kostengünstiger herstellen und auf ihre Maßhaltigkeit einfacher überprüfen.

Erfindungsgemäß weist eine dynamoelektrische Maschine nunmehr an einer Leitungsdurchführung einen elektrisch leitenden Anschlussbolzen, z.B. aus Kupfer auf, der mit dem Inneren der Maschine, also z.B. dem Wicklungssystem oder Sensorleitungen elektrisch leitend verbunden ist. Nach außen werden an den Anschlussbolzen Energieversorgungsleitungen oder Sensorleitungen angeschlossen. Der Anschlussbolzen wird über einer elektrisch isolierenden Gewindebuchse am Gehäuse einer dynamoelektrischen Maschine positioniert und fixiert.

Die Erfindung sowie die vorteilhafte Ausgestaltung der Erfindung werden anhand folgender Ausführungsbeispiele näher erläutert; darin zeigen:
- FIG 1: eine Seitenansicht einer Gewindebuchse,
- FIG 2: einen Schnitt durch eine Gewindebuchse,
- FIG 3: eine Seitenansicht eines Anschlussbolzens,
- FIG 4: einen Schnitt durch einen Anschlussbolzen,
- FIG 5: einen zusammengebauten Zustand von Anschlussbolzen und Gewindebuchse,
- FIG 6: einen Schnitt durch den zusammengebauten Zustand von Anschlussbolzen und Gewindebuchse,
- FIG 7: einen Längsschnitt einer dynamoelektrischen Maschine mit einer derartigen Leitungsdurchführung.

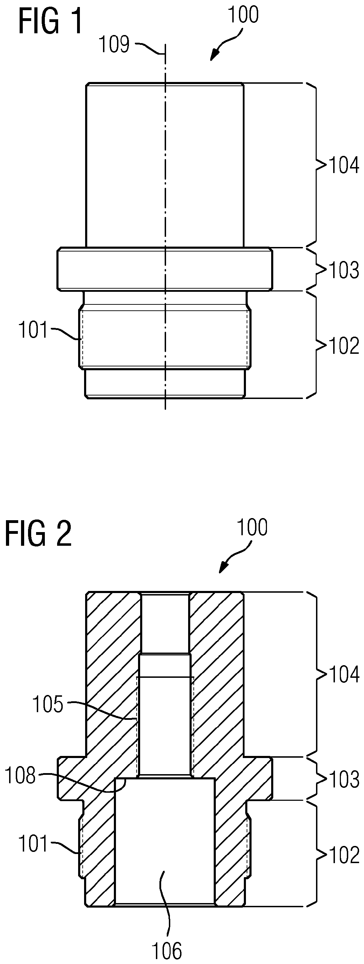

FIG 1 zeigt in einer Seitendarstellung eine Gewindebuchse 100, die in mehrere Abschnitte unterteilbar ist. Diese Abschnitte sind ein unterer Abschnitt 102, ein Kragen 103 und ein oberer Abschnitt 104.

Die Gewindebuchse 100 ist rotationssymmetrisch bezüglich ihrer Achse 109. Im unteren Abschnitt 102 ist auf einer vorgebbaren axialen Länge dieses Abschnitts 102 ein Außengewinde 101 vorgesehen. Über dieses Außengewinde 101 wird, wie später dargestellt, die Gewindebuchse 100 im Gehäuse 2 einer dynamoelektrischen Maschine 1 fixiert.

FIG 2 zeigt im Längsschnitt die Gewindebuchse 100, mit ihren Abschnitten 102, 103 und 104, wobei die Gewindebuchse 100 im unteren Abschnitt 102, als auch auf einem gewissen vorgebbaren axialen Abschnitt des Kragens 103 eine Ausnehmung 106 aufweist. Im verbleibenden Abschnitt des Kragens 103 als auch im oberen Abschnitt 104 ist eine weitere Ausnehmung vorgesehen, die zumindest über einen axialen Teil dieser Abschnitte 103 und 104 ein Innengewinde 105 aufweist.

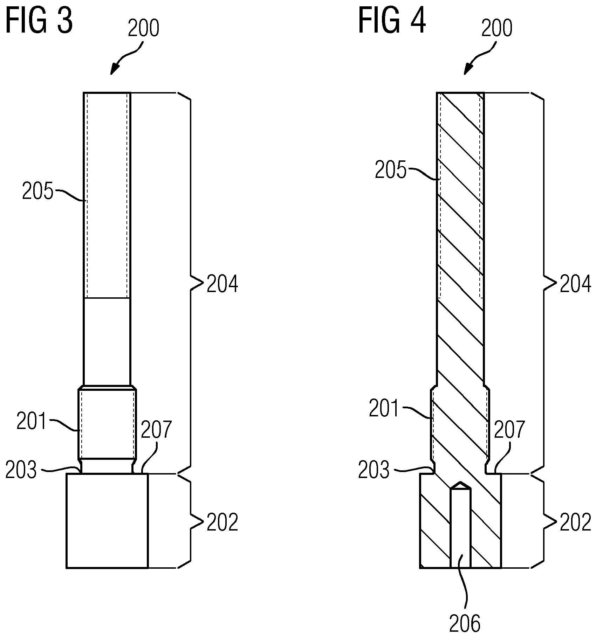

FIG 3 zeigt einen Anschlussbolzen 200 mit einem unteren Abschnitt 202, der eine Anschlagschulter 207 aufweist und in einen Übergang zum oberen Abschnitt 204 einen Einstich 203 aufweist. Im oberen Abschnitt 204 sind zwei Außengewinde vorgesehen. Ein Außengewinde 201 im unteren Teil des oberen Abschnitts 204 und ein Außengewinde 205 im oberen Teil des oberen Abschnitts 204. Wobei in dieser Ausführung das Außengewinde 201 einen größeren Durchmesser aufweist, als das Außengewinde 205.

FIG 4 zeigt im Längsschnitt des Anschlussbolzens 200 im unteren Abschnitt 202 eine Anschlussmöglichkeit 206 für Leitungen und Litzen z.B. zur elektrischen Versorgung der dynamoelektrischen Maschine. Des Weiteren sind auch in dieser Darstellung die beiden Außengewinde 205 und 201 im oberen Abschnitt 204 des Anschlussbolzens 200 dargestellt.

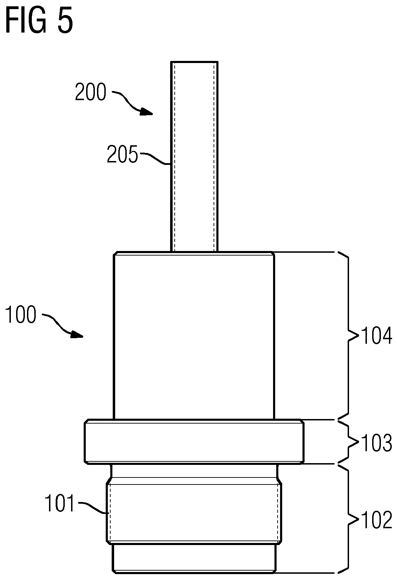

FIG 5 zeigt im zusammengebauten Zustand die Gewindebuchse 100 mit dem Anschlussbolzen 200, der in die Gewindebuchse 100 eingedreht wurde. Im oberen Abschnitt des Anschlussbolzens 200 ist das Außengewinde 205 zu sehen.

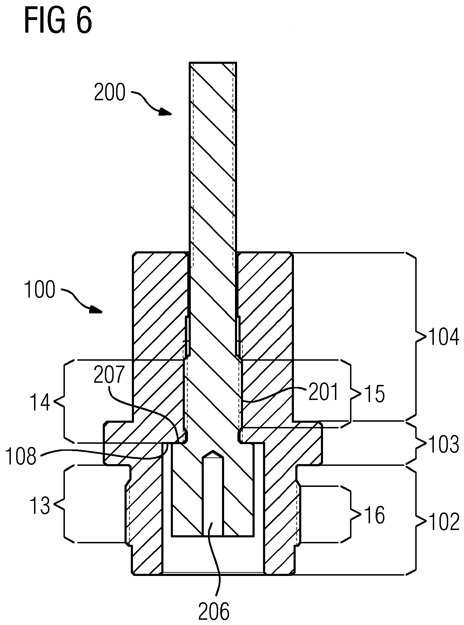

FIG 6 zeigt in einem Längsschnitt des zusammengebauten Zustands nach FIG 5 die Gewindebuchse 100 und den Anschlussbolzen 200. Durch das Einschrauben des Anschlussbolzens 200 in die Gewindebuchse 100 oder das Einschrauben der Gewindebuchse 100 in den Anschlussbolzen 200 und den damit verbundenen Anschlag 207 an der Schulter 108 wird durch das Gewinde 201 ein Zündspalt mit seiner maximalen Einschraubtiefe 14 gebildet.

Diese Schraubverbindung weist eine axiale Gewindelänge 15 im Eingriff des Anschlussbolzens 200 in der Gewindebuchse 100 auf.

Des Weiteren ist ebenso eine maximale Einschraubtiefe 13 der Gewindebuchse im Gehäuse 2 vorgesehen. Diese Schraubverbindung weist eine axiale Gewindelänge 16 im Eingriff der Gewindebuchse 100 in einem Gehäuse 2 auf.

Am Außengewinde 205 im oberen Teil des oberen Abschnitts 204 des Anschlussbolzens 200 kann eine nicht näher dargestellte Kontermutter z.B. zur Positionierung und Fixierung gesetzt werden.

Dabei sind die Zündspalte aufgrund der an sich bekannten Gewindegestaltungen wesentlich länger als die axialen Gewindelängen 15, 16. Auch die Weite des Zündspaltes wird durch diese Schraubverbindung von Anschlussbolzen 200 und Gewindebuchse 100 und/oder Gewindebuchse 100 und Gehäuse 2 vergleichsweise eng.

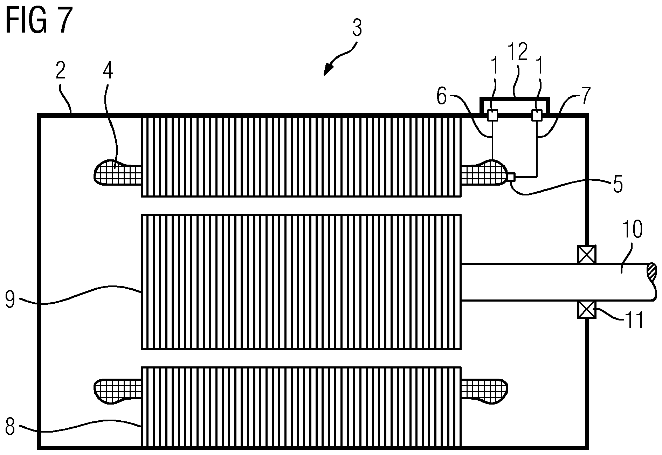

FIG 7 zeigt einen prinzipiellen Längsschnitt einer dynamoelektrischen Maschine 3. Die Leitungen eines Anschlusskastens 12 sind Energieversorgungsleitungen 6 und/oder Sensorleitungen 7, die als Leitungsdurchführung 1 durch das Gehäuse 2 der dynamoelektrischen Maschine 3 führt. Energieversorgungsleitungen 6 sind für das Wicklungssystem 4 der dynamoelektrischen Maschine 3 notwendig, die im Stator 8 ein elektromagnetisches Feld generieren und durch elektromagnetische Wechselwirkungen mit einem Rotor 9 zu einer Drehung der Welle 10 führen, die über Lager 11 am Gehäuse 2 abgestützt ist.

Die Leitungen sind mit dem oder den Anschlussbolzen 200, die elektrisch leitend ausgeführt sind elektrisch leitend kontaktiert.

Die Gewindebuchse 100 ist aus elektrisch isolierendem Material.

## Patentansprüche

1. Dynamoelektrische Maschine (3) für explosive Umgebungen mit zumindest einer Leitungsdurchführung (1), einer Leitung in einem Gehäuse (2) der dynamoelektrischen Maschine (3) mit einer Gewindebuchse (100) und einem Anschlussbolzen (200), wobei die Gewindebuchse (100) ein Isolator ist und in einer Ausnehmung des Gehäuses (2) eingeschraubt ist, wobei der Anschlussbolzen (200) aus elektrisch leitfähigen Material ist und zumindest abschnittsweise mit einem Gewinde versehen ist, wobei an dem Anschlussbolzen (200) an beiden Enden Anschlussmöglichkeiten (206) für Leitungen oder Litzen vorhanden sind, wobei der Anschlussbolzen (200) in die Gewindebuchse (100) einschraubbar ist, wobei die Gewindelänge (15) im Eingriff des Anschlussbolzens (200) in der Gewindebuchse (100) größer ist, als die Gewindelänge (16) im Eingriff von Gewindebuchse (100) im Gehäuse (2), wobei die Gewindebuchse (100) in das Gehäuse (2) eingeschraubt wird und mit einem Kragen (103) und den Gewinde (101,15) einen Zündspalt verlängert, und wobei der Anschlussbolzen (200) eine Anschlagschulter (207) aufweist, die in die Gewindebuchse (100) eingedreht ist und mit der Schulter (108) und den Gewinde (201,15) einen Zündspalt verlängert.

2. Dynamoelektrische Maschine nach Anspruch 1, **dadurch gekennzeichnet, dass** die Gewindehöhe von Gewindebuchse (100) und Anschlussbolzen (200) gleich sind.

3. Dynamoelektrische Maschine (3) nach Anspruch 1 oder 2, **dadurch gekennzeichnet, dass** die Leitungen als Energieversorgungsleitung (6) und/oder Sensorleitung (7) und/oder Datenleitung ausgebildet sind.

## Claims

1. Dynamoelectric machine (3) for explosive atmospheres having at least one line bushing (1), a line in a housing (2) of the dynamoelectric machine (3) having a threaded bushing (100) and a terminal stud (200), wherein the threaded bushing (100) is an insulator and is screwed into a recess in the housing (2), wherein the terminal stud (200) is made from an electrically conductive material and is provided, at least in sections, with a thread, wherein connection options (206) for lines or braids are provided at both ends of the terminal stud (200), wherein the terminal stud (200) can be screwed into the threaded bushing (100), wherein the thread length (15) is greater when the terminal stud (200) engages in the housing (2), wherein the threaded bushing (100) is screwed into the housing (2) and with a collar (103) and the thread (101, 15) lengthens an ignition gap, and wherein the terminal stud (200) has a stop shoulder (207) which is screwed into the threaded bushing (100) and with the shoulder (108) and the thread (201, 15) lengthens an ignition gap.

2. Dynamoelectric machine according to claim 1, **characterised in that** the thread height of the threaded bushing (100) and the terminal stud (200) are the same.

3. Dynamoelectric machine (3) according to claim 1 or 2, **characterised in that** the lines are designed as a power supply line (6) and/or sensor line (7) and/or data line.

## Revendications

1. Machine (3) dynamoélectrique pour des ambiances explosives, comprenant au moins une traversée (1) de ligne, une ligne dans une enveloppe (2) de la machine (3) dynamoélectrique ayant un manchon (100) fileté et un boulon (200) de connexion, le manchon (100) fileté étant un isolateur et étant vissé dans un évidement de l'enveloppe (2), le boulon (200) de connexion étant en un matériau conducteur de l'électricité et étant pourvu, au moins par endroit, d'un filet, dans laquelle il y a sur le boulon (20) de connexion au deux extrémités des possibilités (206) de connexion pour des lignes ou des torons, le boulon (200) de connexion pouvant être fixé dans le manchon (100) fileté, la longueur (15) du filet dans le manchon (100) fileté en prise avec le boulon (200) de connexion étant plus grande que la longueur (16) du filet dans l'enveloppe (2) en prise avec le manchon (100) fileté, le manchon (100) fileté étant vissé dans l'enveloppe (2) et prolongeant, par un collet (103) et le filet (101, 15), une fente d'allumage et dans laquelle le boulon (200) de connexion a un épaulement (207) formant butée, qui est tourné dans le manchon (100) fileté et prolonge une fente d'allumage par l'épaulement (108) et le filet (201, 15).

2. Machine dynamoélectrique suivant la revendication 1, **caractérisée en ce que** la hauteur de filet du manchon (100) fileté et du boulon (200) de connexion sont égales.

3. Machine dynamoélectrique suivant la revendication 1 ou 2, **caractérisée en ce que** les lignes sont constituées sous la forme d'une ligne (6) d'alimentation en électricité et/ou d'une ligne (7) de capteur et/ou d'une ligne de données.
